# EUROPÄISCHE PATENTANMELDUNG

(11) **EP 4 279 337 A1**
(43) Veröffentlichungstag der Anmeldung: **22.11.2023**
(21) Anmeldenummer: 23169949.7
(22) Anmeldetag: 26.04.2023
(51) Int. Cl.: B60R 13/02, F16B 5/06

(54) **INTERIEURELEMENT FÜR EIN KRAFTFAHRZEUG SOWIE VERFAHREN ZUM HERSTELLEN EINES INTERIEURELEMENTS**

(30) Priorität: 17.05.2022 DE 102022112340
(71) Anmelder: Lisa Dräxlmaier GmbH, 84137 Vilsbiburg (DE)
(72) Erfinder: Dietl, Günter, 84432 Hohenpolding (DE); Bubenhofer, Max, 84130 Dingolfing (DE)

(57) **Zusammenfassung**

Die Erfindung betrifft ein Interieurelement (1) für ein Kraftfahrzeug sowie ein Verfahren zum Herstellen eines Interieurelements (1). Das Interieurelement (1) weist einen flachen Dekorträger (2), der an einer seiner Dekorträgerbreitseiten (4) dekorträgerseitige Formschlusselemente (6) auf. Zudem weist das Interieurelement (1) einen flachen Befestigungsträger (3) auf, der an einer seiner Befestigungsträgerbreitseiten (5) befestigungsträgerseitige Formschlusselemente (7) aufweist. Die Formschlusselemente (6, 7) korrespondieren paarweise zum Bilden einer jeweiligen Formschlusseinrichtung (10, 12, 14, 15) miteinander, und die Formschlusselemente (6, 7) sind entlang einer Montierrichtung (11) miteinander in Eingriff gebracht, wodurch die Träger (2, 3) mittels der Formschlusseinrichtungen (10, 12, 14, 15), die durch die ineinandergreifenden Formschlusselemente (6, 7) gebildet sind, miteinander verbunden sind. Die Montierrichtung (11) verläuft parallel zu der jeweiligen Trägerbreitseite (4, 5) der Träger (2, 3).

## Beschreibung

### Technisches Gebiet

Die vorliegende Erfindung betrifft ein Interieurelement für ein Kraftfahrzeug. Des Weiteren betrifft die Erfindung ein Verfahren zum Herstellen eines solchen Interieurelements. Bei dem Interieurelement handelt es sich insbesondere um einen Deckel für ein Staufach, das im Innenraum des Kraftfahrzeugs angeordnet ist. Außenseitig ist das Interieurelement beispielsweise mit einem Dekormaterial bezogen, etwa mit einem Textil, einem Leder, einem Kunstleder etc.

### Stand der Technik

Ein solches Interieurelement wird heutzutage hergestellt, beispielsweise indem zwei flache Bauteile miteinander verschweißt werden, sodass das Interieurelement eine Sandwichkonstruktion aus den beiden miteinander verschweißten Bauteilen aufweist. Es kommt beim Verschweißen der beiden Bauteile jedoch heutzutage zu Qualitätsproblemen, da die beiden Bauteile zu stark und/oder zu schwach zusammengeschweißt werden, was zu einer beschädigten Außenoberfläche bzw. zu nicht zuverlässig miteinander verbundenen Bauteilen führt. Zudem müssen für das Verschweißen der beiden Bauteile entsprechende Schweißanlagen unterhalten und betrieben werden, wodurch die Fertigung des Interieurelements einen besonders hohen Energie- und Ressourceneinsatz erfordert. Zudem dauert ein Verschweißen - insbesondere von Kunststoffteilen - besonders lang, wodurch letztendlich die Herstellung des Interieurelements besonders aufwendig ist. Ein weiterer Nachteil des thermischen Fügens bzw. Schweißens der beiden Bauteile zu dem Interieurelement ist, dass eines oder beide der Bauteile sich verziehen kann/können, was zu Problemen beim Einbau und/oder bei der Funktion des Interieurelements, insbesondere wenn dieses als ein Deckel für das Staufach ausgebildet ist, führt. Aufgrund einer geforderten besonders geringen Dicke des Interieurelements bzw. der beiden miteinander zu verbindenden Bauteile ist ein herkömmliches, senkrechtes Verclipsen der beiden Bauteile nicht möglich - insbesondere in Anbetracht der besonders geringen Bauräume zwischen den beiden Bauteilen, um beispielsweise eine Schwenkachse aufzunehmen - nicht möglich.

### Beschreibung der Erfindung

Es ist die Aufgabe der Erfindung, die Herstellung eines besonders flachen Interieurelements zu vereinfachen.

Diese Aufgabe wird durch die Gegenstände der unabhängigen Patentansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Ein erfindungsgemäßes Interieurelement, das für ein Kraftfahrzeug, insbesondere dessen Innenraum, vorgesehen ist, weist einen flachen Dekorträger auf. Unter "flach" ist hierin zu verstehen, dass der als flach bezeichnete bzw. beschriebene Gegenstand zwei einander gegenüberliegende und über eine Stärke/Dicke des Gegenstands voneinander beabstandete Breitseiten aufweist, die im Gegensatz zu Schmalseiten desselben Gegenstands viel größer sind. Mit anderen Worten sind eine Breite und eine Länge des entsprechenden Gegenstands gegenüber einer Dicke bzw. Stärke desselben Gegenstands dominant. Insoweit ist der flache Dekorträger viel breiter bzw. viel länger als dick. Der Dekorträger ist insbesondere dazu eingerichtet, mit einem Dekor, beispielsweise einem Textil, einem Leder, einem Kunstleder etc., bezogen bzw. kaschiert zu werden, wobei dann in bestimmungsgemäßer Einbaulage des Interieurelements mit dem bezogenen Dekorträger das Dekor in den Innenraum des Kraftfahrzeugs, das heißt hin zu Insassen des Kraftfahrzeugs, weist.

Das Interieurelement weist zudem einen flachen Befestigungsträger auf. Insbesondere sind der Dekorträger und der Befestigungsträger aus dem gleichen Material, beispielsweise Kunststoff, ausgebildet. Es ist ebenso denkbar, dass der Dekorträger und der Befestigungsträger jeweils von unterschiedlichem Material sind.

Der flache Dekorträger weist an einer seiner Dekorträgerbreitseiten dekorträgerseitige Formschlusselemente auf, wobei der Befestigungsträger an einer seiner Befestigungsträgerbreitseiten befestigungsträgerseitige Formschlusselemente aufweist. Dabei korrespondieren die Formschlusselemente jeweils paarweise zum Bilden einer jeweiligen Formschlusseinrichtung. Mit anderen Worten sind eines der dekorträgerseitigen Formschlusselemente und eines der befestigungsträgerseitigen Formschlusselemente dazu eingerichtet, als ein Formschlusselementpaar miteinander eine der Formschlusseinrichtungen zu bilden.

Bei dem Interieurelement sind der flache Dekorträger und der flache Befestigungsträger formschlüssig miteinander verbunden, indem die Formschlusselemente entlang einer Montierrichtung miteinander in Eingriff gebracht sind, wodurch die Träger mittels der Formschlusseinrichtungen, die durch die ineinandergreifenden Formschlusselemente gebildet sind, miteinander verbunden sind. Die Montierrichtung verläuft dabei parallel zur jeweiligen Trägerbreitseite, das heißt parallel zur Dekorträgerbreitseite und/oder parallel zur Befestigungsträgerbreitseite und ist insbesondere gerade sowie knick- und/oder kurvenfrei.

Die Erfindung betrifft zudem ein Verfahren zum Herstellen eines solchen Interieurelements, wobei der Dekorträger und der Befestigungsträger miteinander verbunden werden, indem der Dekorträger und der Befestigungsträger zunächst in eine Vormontierposition gebracht werden. In der Vormontierposition und auch beim fertig hergestellten Interieurelement sind die die dekorträgerseitigen Formschlusselemente aufweisende Dekorträgerbreitseite und die die befestigungsträgerseitige Formschlusselemente aufweisende Befestigungsträgerbreitseite einander zugewandt. Die Vormontierposition zeichnet sich des Weiteren dadurch aus, dass zum darauffolgenden formschlüssigen Verbinden der Träger lediglich das Bewegen der Träger relativ zueinander entlang der Montierrichtung erforderlich ist. Ausgehend von der Vormontierposition werden also die Träger entlang der parallel zu der jeweiligen Trägerbreitseite verlaufenden - insbesondere geraden - Montierrichtung relativ zueinander bewegt, wodurch die Formschlusselemente zum Bilden der Formschlusseinrichtungen zwischen den Trägern paarweise miteinander in Eingriff gebracht werden. Hierdurch werden zwischen dem Dekorträger und dem Befestigungsträger durch die paarweise ineinander eingreifenden Formschlusselemente, also die Formschlusseinrichtungen, gebildet, sodass der Dekorträger und der Befestigungsträger mittels der Formschlusseinrichtungen formschlüssig miteinander verbunden sind.

Das erfindungsgemäße Interieurelement ist also besonders einfach und/oder aufwandsarm herstellbar, da ein aufwendiges und hinsichtlich einer Verbindungsqualität nicht zufriedenstellendes Verschweißen der beiden Träger entfallen kann. Stattdessen werden die beiden Träger miteinander verbunden, indem sie einfach in die Vormontierposition gebracht werden und dann durch ein relatives Bewegen zueinander entlang der Montierrichtung formschlüssig verbunden werden. Zum Zusammensetzen bzw. Verbinden der beiden Träger kann also ein Unterhalten und Betreiben einer energieaufwendigen Schweißeinrichtung entfallen, wobei eine besonders hohe Teilequalität erreicht wird und ein Anteil von Ausschussteilen besonders gering ist. Das bedeutet, dass das erfindungsgemäße Interieurelement bzw. das erfindungsgemäße Verfahren zum Herstellen des Interieurelements ökonomisch und ökologisch vorteilhaft sind. Zudem ist es aufgrund des erfindungsgemäßen Interieurelements bzw. aufgrund des Verfahrens zum Herstellen des Interieurelements ermöglicht, die beiden jeweils flachen Träger zuverlässig miteinander zu verbinden, wobei auf eine bauraumgreifende Verclipsung entlang einer Dickenrichtung bzw. Stärkenrichtung der beiden Träger verzichtet wird. Denn bei einer solchen herkömmlichen Verclipsung bzw. Verrastung der beiden Träger entlang der jeweiligen Stärkerichtung ragt ein Rastkeil über wenigstens einen der Träger hinaus, wodurch ein Beziehen des Dekorträgers mit dem Dekor und/oder ein Befestigen des Interieurelements im Innenraum des Kraftfahrzeugs behindert ist. Durch den Entfall einer solchen herkömmlichen Verrastung bzw. Verclipsung wird eine angespannte Packaging-Situation im Innenraum des Kraftfahrzeugs zumindest teilweise entschärft.

Generell ist hierin zu verstehen, dass eine Formschlusseinrichtung hauptsächlich einen Formschluss und optional einen Kraftschluss, keinesfalls aber einen Stoffschluss, vermittelt. In einer Weiterbildung des Interieurelements ist vorgesehen, dass die Träger unter Ausbleiben eines Stoffschlusses zwischeneinander miteinander verbunden sind. Insbesondere sind die Träger ausschließlich mittels der Formschlusseinrichtungen miteinander verbunden, das heißt, neben der kraft- und/oder formschlüssigen Verbindung der beiden Träger mittels der Formschlusseinrichtungen ist/wird keine stoffschlüssige Verbindung zwischen den beiden Trägern ausgebildet. Der flache Dekorträger und der flache Befestigungsträger sind also gemäß dieser Weiterbildung nicht verschweißt, nicht verklebt, nicht verschmolzen etc. Hierdurch ist eine besonders einfache Herstellung des Interieurelements noch weiter unterstützt, und die beiden Träger sind - beispielsweise zu Reparatur- und/oder Wartungszwecken - besonders einfach und/oder aufwandsarm, reversibel zerstörungsfrei voneinander lösbar, ohne dass einer der beiden Träger dabei beschädigt wird.

Wie bereits dargelegt, weist das Interieurelement zwei oder mehr Formschlusseinrichtungen auf. In weiterer möglicher Ausgestaltung des Interieurelements sperrt eine erste dieser Formschlusseinrichtungen ein Bewegen der Träger relativ zueinander entlang einer Hochachse des Interieurelements, wohingegen eine zweite dieser Formschlusseinrichtungen ein Bewegen der Träger relativ zueinander entlang der jeweiligen Trägerbreitseite sperrt. Hierdurch ergibt sich eine besonders einfache Konstruktion des Dekorträgers und des Befestigungsträgers und infolgedessen des Interieurelements, da auf eine komplizierte Geometrie einer jeden der Formschlusseinrichtungen verzichtet werden kann, und nur wenigstens eine bzw. einige wenige der Formschlusseinrichtungen so ausgebildet werden müssen, dass durch diese das Bewegen der Träger entlang der Trägerbreitseiten gesperrt wird. So kann beispielsweise vorgesehen sein, dass die jeweilige erste Formschlusseinrichtung als eine einfache Hakenverbindung realisiert wird, um das relative Bewegen der Träger entlang der Hochachse des Interieurelements, das heißt entlang einer Stärken- bzw. Dickenrichtung des Interieurelements, zu verhindern. Dahingegen ist die zweite Formschlusseinrichtung so ausgebildet, dass ein Bewegen der beiden Träger entlang der jeweiligen Trägerbreitseite, das heißt beispielsweise ein Abgleiten der beiden Träger auf deren Trägerbreitseiten, blockiert ist, wofür eine kompliziertere Geometrie als die der ersten Formschlusseinrichtung erforderlich ist. Durch die Aufteilung der Sperrwirkungen auf Formschlusseinrichtungen erster Art und auf Formschlusseinrichtungen zweiter Art ist insgesamt eine einfachere Struktur der Träger ermöglicht. Denn es ist beispielsweise denkbar, dass das Interieurelement mehrere einfach ausgebildete, erste Formschlusseinrichtungen aufweist und lediglich eine oder besonders wenige zweite Formschlusseinrichtungen. Dabei ist eine besonders zuverlässige bzw. feste Verbindung zwischen dem Dekorträger und dem Befestigungsträger gegeben.

In diesem Zusammenhang sieht eine weitere Ausgestaltung des Interieurelements vor, dass die zweite Formschlusseinrichtung bzw. die jeweilige zweite Formschlusseinrichtung als eine Rastverbindung ausgebildet ist. Indem also die beiden Träger entlang der Montierrichtung aufeinander zubewegt werden, wird ein Rastelement der Rastverbindung, das heißt das Formschlusselement des Dekorträgers oder das Formschlusselement des Befestigungsträgers, gespannt. Es wird entspannt, wenn die Träger relativ zueinander eine Endposition erreicht haben. In dieser entspannten Stellung des Rastelements, beispielsweise eines Rastkeils, hintergreift das Rastelement das entsprechende zugeordnete der Formschlusselemente des Befestigungsträgers bzw. des Dekorträgers. Auf diese Weise ist ein Bewegen der Träger relativ zueinander entlang der Trägerbreitseiten gesperrt, sobald die beiden Träger zum Interieurelement zusammengesetzt bzw. verbunden sind.

Es ergeben sich ein besonders stabiler Dekorträger, ein besonders stabiler Befestigungsträger und infolgedessen ein besonders stabiles und besonders flaches Interieurelement, wenn - wie in weiterer Ausgestaltung vorgesehen - der jeweilige Träger einen Trägerkörper aufweist, wobei der Trägerkörper und das Formschlusselement einstückig miteinander ausgebildet sind. Mit anderen Worten weist der Dekorträger einen Dekorträgerkörper auf, wobei dieser und das dekorträgerseitige Formschlusselement einstückig miteinander ausgebildet sind. Der Befestigungsträger weist demnach einen Befestigungsträgerkörper auf, wobei der Befestigungsträgerkörper und das befestigungsträgerseitige Formschlusselement einstückig miteinander ausgebildet sind. Es ist insbesondere vorgesehen, dass der jeweilige Trägerkörper und das entsprechend zugehörige Formschlusselement unter einem Urformen des entsprechenden Trägers miteinander verbunden hergestellt werden. Das bedeutet, dass unter dem Urformen des entsprechenden Trägers sowohl der Trägerkörper als auch das Formschlusselement ausgebildet werden. Hierdurch ist einem Gedanken an ein besonders energieeffizient hergestelltes Interieurelement bzw. an ein besonders energieeffizientes Verfahren zum Herstellen des Interieurelements im besonderen Maße Rechnung getragen, da nicht nur zum Verbinden der beiden Träger auf ein Schweißen verzichtet wird, sondern auch beim Ausbilden der einzelnen Träger des Interieurelements. Zudem sind der jeweilige Träger und dessen zugehörige Formschlusselemente besonders innig und dadurch zuverlässig miteinander verbunden.

Es kann vorgesehen sein, dass der jeweilige Träger und dessen zugehörige Formschlusselemente aus dem gleichen Material ausgebildet sind. Genauso gut ist es denkbar, dass der jeweilige Träger und dessen zugehörige Formschlusselemente aus unterschiedlichen Materialien ausgebildet sind. Beispielsweise kann vorgesehen sein, dass ein Material des Trägerkörpers in flüssigem oder pastösem Zustand an ein Material des entsprechenden Formschlusselements angespritzt wird oder das Formschlusselement in das flüssige bzw. pastöse Material des Trägerkörpers eingetaucht wird. Hiernach erfolgt ein Aushärten des Materials des Trägerkörpers, sodass eine stoffschlüssige Verbindung zwischen dem Trägerkörper und dem Formschlusselement geschaffen ist. Ebenso ist ein generatives Herstellen des jeweiligen Trägers denkbar, etwa ein 3D-Drucken, wobei im selben Druckvorgang unterschiedliche Materialien zum Herstellen desselben Bauteils eingesetzt werden können. Je nach Gestalt des jeweiligen Trägers ist auch ein Coextrudieren zweiter unterschiedlicher Materialien denkbar.

Das Zusammensetzen bzw. Verbinden der beiden Träger zu dem Interieurelement gestaltet sich besonders einfach, indem - gemäß einer weiteren Ausgestaltung des Interieurelements - das Formschlusselement eines der Träger durch eine Öffnung des Formschlusselements des anderen Trägers hindurchgreift und dabei einen in die Öffnung hineinragenden Formschlusskörper des anderen Trägers hintergreift. So ist es zum Beispiel denkbar, dass das Formschlusselement des Dekorträgers eine dekorträgerseitige Öffnung und einen dekorträgerseitigen Formschlusskörper aufweist, wobei der dekorträgerseitige Formschlusskörper in die dekorträgerseitige Öffnung hineinragt, das heißt von einem Rand der Öffnung in die Öffnung hinein hervorspringt. In diesem Fall greift dann das befestigungsträgerseitige Formschlusselement in die dekorträgerseitige Öffnung ein und hintergreift so den dekorträgerseitigen Formschlusskörper, wenn die Träger zu dem Interieurdekorelement zusammengesetzt bzw. verbunden sind. Alternativ oder bei einer anderen der Formschlusseinrichtungen kann vorgesehen sein, dass das Formschlusselement des Befestigungsträgers eine befestigungsträgerseitige Öffnung und einen befestigungsträgerseitigen Formschlusskörper aufweist, wobei der befestigungsträgerseitige Formschlusskörper in die befestigungsträgerseitige Öffnung hineinragt. Dann greift das dekorträgerseitige Formschlusselement in die befestigungsträgerseitige Öffnung hinein, wodurch das dekorträgerseitige Formschlusselement den befestigungsträgerseitigen Formschlusskörper hintergreift. Bei der jeweiligen Öffnung der entsprechenden Formschlusseinrichtung handelt es sich insbesondere um eine Durchgangsöffnung, die den entsprechenden Träger vollständig durchdringt. Der Träger, dessen Formschlusselement die Öffnung aufweist, ist so besonders einfach herstellbar, insbesondere wenn der entsprechende Träger mittels Gießens, insbesondere Spritzgießens, hergestellt wird. Denn auf eine besonders komplizierte Gussformgeometrie kann zumindest im Bereich des Formschlusselements mit der Öffnung verzichtet werden.

Eine weitere mögliche Ausgestaltung sieht vor, dass die Träger mittels einer Vielzahl von Formschlusseinrichtungen miteinander verbunden sind, wobei die Formschlusselemente der Formschlusseinrichtungen über die jeweilige Trägerbreitseite verteilt sind. Dabei können die Formschlusselemente bzw. Formschlusseinrichtungen über die jeweilige Trägerbreitseite regelmäßig oder unregelmäßig verteilt sein. Ist das Interieurelement beispielsweise besonders lang oder besonders breit, wird aufgrund der über die Trägerbreitseiten verteilten Formschlusseinrichtungen gewährleistet, dass ein unerwünschtes Verformen eines der Träger unterbleibt. Ist das Interieurelement in bestimmungsgemäßer Einbaulage im Innenraum des Kraftfahrzeugs angeordnet, kann es nämlich beispielsweise dazu kommen, dass ein Insasse des Kraftfahrzeugs sich auf das Interieurelement aufstützt, wobei dann ein Verformen des Interieurelements aufgrund der Vielzahl der Formschlusseinrichtungen bzw. Formschlusselemente verhindert ist. Des Weiteren trägt die Vielzahl der Formschlusseinrichtungen zu einer besonders vorteilhaften NVH-Qualität (Noise, Vibrations, Harshness - Geräusche, Vibrationen, Rauheit) bei, da das Interieurelement lediglich besonders kleine Bereiche aufweist, in denen die Träger nicht mittels einer Formschlusseinrichtung miteinander verbunden sind.

Weitere Vorteile, Merkmale und Einzelheiten der Erfindung können sich aus der nachfolgenden Beschreibung möglicher Ausführungsbeispiele sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: eine Draufsicht auf einen Dekorträger eines Interieurelements, der mit einem Befestigungsträger formschlüssig verbunden ist;
- Fig. 2: eine perspektivische detailliertere Ansicht einer ersten Formschlusseinrichtung;
- Fig. 3: eine perspektivische detailliertere Ansicht einer von der ersten Formschlusseinrichtung unterschiedlich ausgebildeten, zweiten Formschlusseinrichtung;
- Fig. 4: eine perspektivische und geschnittene Ansicht der ersten Formschlusseinrichtung; und
- Fig. 5: eine perspektivische und geschnittene Ansicht der zweiten Formschlusseinrichtung.

Im Folgenden werden ein Interieurelement 1 für ein Kraftfahrzeug (nicht dargestellt) und ein Verfahren zum Herstellen des Interieurelements 1 in gemeinsamer Beschreibung dargelegt. Gleiche und funktionsgleiche Elemente sind in den Figuren mit gleichem Bezugszeichen versehen.

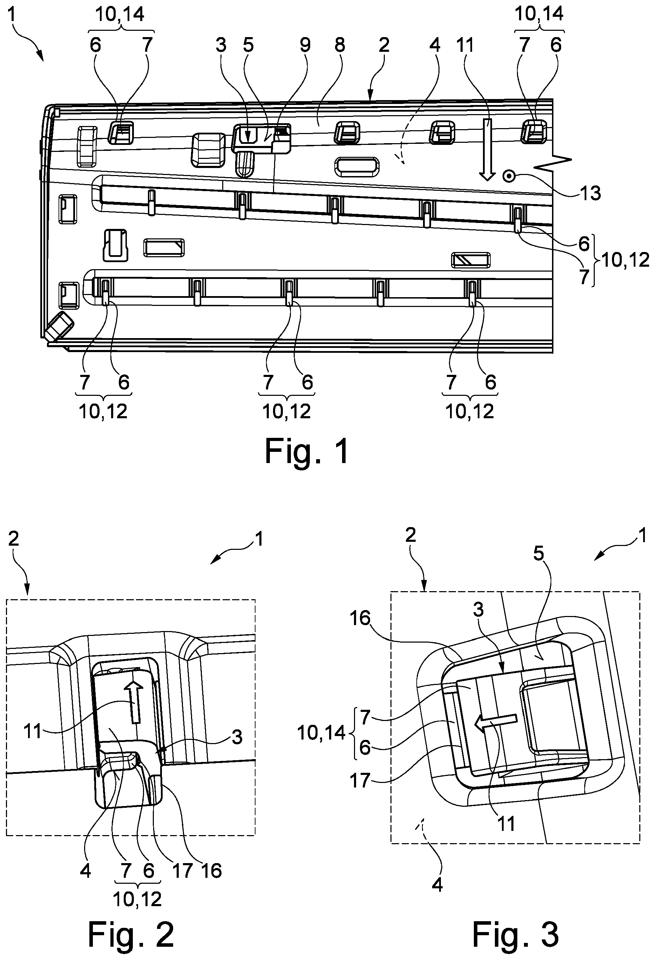

Fig. 1 zeigt eine Draufsicht auf einen Dekorträger 2 des Interieurelements 1, wobei der Dekorträger 2 mit einem Befestigungsträger 3 des Interieurelements 1 formschlüssig verbunden ist. Das bedeutet, dass das Interieurelement 1 sowohl den Dekorträger 2 als auch den Befestigungsträger 3 aufweist. Ein Dekorelement, mit dem der Dekorträger 2 des Interieurelements 1 bezogen ist, ist in den Fig. aus Übersichtlichkeitsgründen nicht dargestellt. Wie aus Fig. 1 des Weiteren hervorgeht, sind der Dekorträger 2 und der Befestigungsträger 3 jeweils flache Gebilde, die jeweils viel breiter und viel länger als stark bzw. dick sind. Der Dekorträger 2 weist eine Dekorträgerbreitseite 4 auf, wobei der Befestigungsträger 3 eine Befestigungsträgerbreitseite 5 aufweist. Die beiden Trägerbreitseiten 4, 5 sind bei dem zusammengesetzten Interieurelement 1 - wie in Fig. 1 zu erkennen ist - einander zugewandt. Bei dem Interieurelement 1 handelt es sich zum Beispiel um einen sogenannten Schmetterlingsdeckel zum Schließen bzw. Öffnen eines Staufachs, das insbesondere in einer Mittelkonsole oder Mittelarmlehne angeordnet ist. Das bedeutet, dass es sich bei dem Dekorträger 2 zum Beispiel um einen Außendeckel handeln kann, wobei es sich dann bei dem Befestigungsträger 3 um einen Innendeckel handeln kann.

Der Dekorträger 2 weist ferner wenigstens ein dekorträgerseitiges Formschlusselement 6, vorliegend eine Vielzahl von dekorträgerseitigen Formschlusselementen 6, auf, wovon aus Übersichtlichkeitsgründen nur einige wenige mit dem entsprechenden Bezugszeichen versehen sind. Deutlicher als in Fig. 1 sind die dekorträgerseitigen Formschlusselemente 6 in den Fig. 2 bis 5 zu erkennen. Das jeweilige dekorträgerseitige Formschlusselement 6 ist an der Dekorträgerbreitseite 4 des Dekorträgers 2 angeordnet.

Der flache Befestigungsträger 3 weist wenigstens ein befestigungsträgerseitiges Formschlusselement 7, vorliegend eine Vielzahl von befestigungsträgerseitigen Formschlusselementen 7, auf, wobei das jeweilige befestigungsträgerseitige Formschlusselement 7 an der Befestigungsträgerbreitseite 5 ausgebildet bzw. angeordnet ist. Im vorliegenden Beispiel sind ein Befestigungsträgerkörper 8 des Befestigungsträgers 3 und die befestigungsträgerseitigen Formschlusselemente 7 einstückig miteinander ausgebildet. Gleichermaßen gilt für das vorliegenden Beispiel, dass ein Dekorträgerkörper 9 des Dekorträgers 2 und die dekorträgerseitigen Formschlusselemente 6 einstückig miteinander ausgebildet sind.

Aus Fig. 1 ist des Weiteren zu erkennen, dass die Formschlusselemente 6, 7 jeweils paarweise miteinander korrespondieren, derart, dass jeweils durch ein dekorträgerseitiges Formschlusselement 6 und ein entsprechend zugehöriges befestigungsträgerseitiges Formschlusselement 7 eine jeweilige Formschlusseinrichtung 10 gebildet ist.

Zum Herstellen des Interieurelements 1 gehört unter anderem, dass der Dekorträger 2 und der Befestigungsträger 3 miteinander verbunden werden. Dies geschieht vorliegend, indem der Dekorträger 2 und der Befestigungsträger 3 zunächst in eine Vormontierposition gebracht werden, in der die Formschlusselemente 6, 7 grob aneinander ausgerichtet sind, sodass nach dem Anordnen der Träger 2, 3 in deren Vormontierposition das Verbinden der Träger 2, 3 mit nur einem einzigen Arbeitsschritt bzw. Arbeitshub erfolgt. Ausgehend von der Vormontierposition werden der Dekorträger 2 und der Befestigungsträger 3 entlang einer parallel zu der jeweiligen Trägerbreitseite 4, 5 verlaufenden Montierrichtung 11 relativ zueinander bewegt, sodass die Formschlusselemente 6, 7 zum Bilden der Formschlusseinrichtungen 10 zwischen den Trägern 2, 3 paarweise miteinander in Eingriff gebracht werden. Mit anderen Worten wird die jeweilige Formschlusseinrichtung 10 zwischen den Trägern 2, 3 gebildet, indem die Formschlusselemente 6, 7 paarweise ineinander eingreifen. Dabei ist vorgesehen, dass die Montierrichtung 11 gerade und knickfrei bzw. kurvenfrei ist, wodurch das Verbinden der Träger 2, 3 besonders einfach ist.

Es wird also zwischen den Trägern 2, 3 eine formschlüssige und gegebenenfalls kraftschlüssige, keinesfalls aber eine stoffschlüssige Verbindung hergestellt, wobei eine Anzahl der Formschlusselemente 6, 7 und eine daraus resultierende Anzahl von Formschlusseinrichtungen 10 sowie eine Verteilung der Formschlusseinrichtungen 10 über die jeweilige Trägerbreitseite 4, 5 so gewählt ist, dass das aus den beiden verbundenen Trägern 2, 3 resultierende Interieurelement 1 besonders steif ist. Insbesondere wird die Anzahl der Formschlusseinrichtungen 10 bzw. deren Anordnung bzw. Verteilung über die jeweilige Trägerbreitseite 4, 5 so gewählt, dass das Interieurelement 1 eine Steifigkeit aufweist, die es aufweisen würde, wenn die beiden Träger 2, 3 auf herkömmliche Weise stoffschlüssig miteinander verbunden wären, beispielsweise miteinander verschweißt wären. Ein der vorliegenden Erfindung zugrundeliegender Gedanke ist es, das Schweißen als Prozessschritt zum Herstellen des Interieurelements 1 obsolet zu machen. Dies erfolgt vorliegend durch die Formschlusseinrichtungen 10, die unregelmäßig oder - wie vorliegend, siehe Fig. 1 - regelmäßig über die Trägerbreitseiten 4, 5 verteilt sind. Mit anderen Worten ist bei dem hierin beschriebenen Interieurelement 1 insbesondere vorgesehen, dass die Träger 2, 3 unter Ausbleiben eines Stoffschlusses zwischeneinander, insbesondere ausschließlich mittels der Formschlusseinrichtungen 10, miteinander verbunden sind.

Fig. 2 zeigt in perspektivischer und detaillierterer Ansicht, dass eine oder mehr der Formschlusseinrichtungen 10 als eine erste Formschlusseinrichtung 12 ausgebildet sein kann/können, mittels derer ein Bewegen der Träger 2, 3 relativ zueinander entlang einer Hochachse 13 des Interieurelements 1 gesperrt ist. Die Hochachse 13 ist in Fig. 1 eingezeichnet und springt senkrecht auf der Zeichnungsebene der Fig. 1 hervor. Dementsprechend ist die Hochachse 13 als parallel zu einer Stärkenrichtung bzw. Dickenrichtung des jeweiligen Trägers 2, 3 anzusehen.

Fig. 3 zeigt in perspektivischer und detaillierterer Ansicht, dass eine andere der Formschlusseinrichtungen 10 als eine zweite Formschlusseinrichtung 14 ausgebildet sein kann, mittels derer ein Bewegen der Träger 2, 3 relativ zueinander entlang der jeweiligen Trägerbreitseite 4, 5 gesperrt ist. Im vorliegenden Beispiel ist die zweite Formschlusseinrichtung 14 als eine Rastverbindung 15 ausgebildet. Aus einer Zusammenschau der Fig. 2 mit der Fig. 3 wird deutlich, dass die Formschlusseinrichtungen 10 bzw. die Formschlusseinrichtungen 12, 14 hinsichtlich der Montierrichtung 11 rechtwinklig zueinander angeordnet sein können, sodass beim Verbinden der Träger 2, 3 das dekorträgerseitige Formschlusselement 6 seitlich (siehe Fig. 2) in das befestigungsträgerseitige Formschlusselement 7 einrückt, wohingegen bei der zweiten Formschlusseinrichtung 14 (siehe Fig. 3) das dekorträgerseitige Formschlusselement 6 frontal in das befestigungsträgerseitige Formschlusselement 7 einrückt.

In Fig. 3 ist des Weiteren besonders deutlich zu erkennen, dass vorliegend das dekorträgerseitige Formschlusselement 6 eine Öffnung 16 und einen Formschlusskörper 17 aufweist, wobei der Formschlusskörper 17 ausgehend von einem Rand der Öffnung 16 - quasi als Materialfortsatz - in einen materialfreien Bereich der Öffnung 16 hineinragt. Das bedeutet, dass der Formschlusskörper 17 zumindest teilweise innerhalb einer Öffnungskontur der Öffnung 16 angeordnet ist. Das Formschlusselement 7 des Befestigungsträgers 3 greift durch die Öffnung 16 des Formschlusselements 6 des Dekorträgers 2 hindurch und hintergreift dabei den Formschlusskörper 17 des Formschlusselements 6. Somit erstreckt sich der Befestigungsträger 3 zumindest teilweise durch den Dekorträger 2 hindurch, nämlich indem das befestigungsträgerseitige Formschlusselement 7 sich durch die Öffnung 16 des Dekorträgers 2 hindurch erstreckt. Generell kann in alternativer Ausgestaltung vorgesehen sein, dass der Rand der Öffnung 16 ohne einen in die Öffnung 16 hineinragenden Materialfortsatz als der Formschlusskörper 17 fungiert. In bestimmungsgemäßer Einbaulage hintergreift also das Formschlusselement 7 des Befestigungsträgers 3 den Rand der Öffnung 16. Natürlich ist eine umgekehrte Ausgestaltung, bei der das befestigungsseitige Formschlusselement 7 die Öffnung 16 aufweist und das dekorträgerseitige Formschlusselement 6 den Befestigungsträger 3 durch dessen Öffnung 16 hintergreift, denkbar.

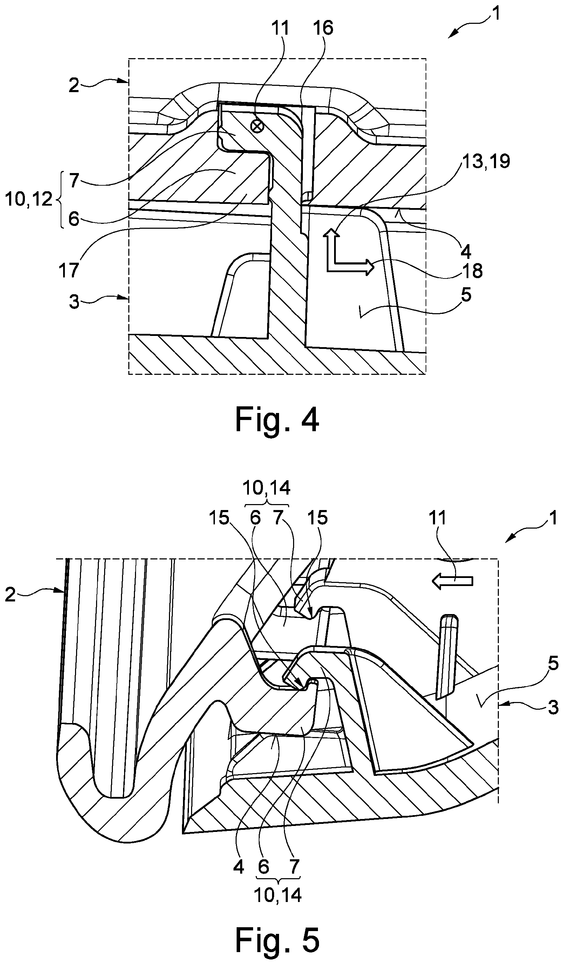

Fig. 4 zeigt eine perspektivische und geschnittene Ansicht der ersten Formschlusseinrichtung 12, wobei zu erkennen ist, dass mittels dieser ersten Formschlusseinrichtung 12 ein Bewegen der Träger 2, 3 senkrecht zur Montierrichtung 11, das heißt entlang der Trägerbreitseiten 4, 5 (siehe Pfeil 18) und entlang der Hochachse 13 (siehe Pfeil 19) gesperrt ist.

Fig. 5 zeigt in perspektivischer und geschnittener Ansicht die zweite Formschlusseinrichtung 14, mittels derer vorliegend eine Rastverbindung 15 zwischen dem Dekorträger 2 und dem Befestigungsträger 3 vermittelt wird. Aufgrund der Rastverbindung 15 ist mittels der zweiten Formschlusseinrichtung 14 ein relatives Bewegen der Träger 2, 3 entlang der Montierrichtung 11 gesperrt. Indem der Dekorträger 2 und der Befestigungsträger 3 in Montierrichtung 11 aufeinander zubewegt werden, gleiten die Formschlusselemente 6, 7 aneinander ab, wodurch das dekorträgerseitige Formschlusselement 6 und/oder das befestigungsträgerseitige Formschlusselement 7 gespannt werden/wird. Sobald die Träger 2, 3 relativ zueinander ihre Endposition erreicht haben, entspannen/entspannt sich das dekorträgerseitige Formschlusselement 6 und/oder das befestigungsträgerseitige Formschlusselement 7, sodass die Rastverbindung 15 zwischen den Trägern 2, 3 hergestellt ist.

Durch das Interieurelement 1 und durch das Verfahren zum Herstellen des Interieurelements 1 ist eine jeweilige Möglichkeit aufgezeigt, wie die Herstellung eines besonders flachen Interieurelements 1 vereinfacht werden kann. Dabei werden der Dekorträger 2 und der Befestigungsträger 3 - anstatt miteinander verschweißt zu werden - aufeinander aufgesetzt (das heißt in Vormontierposition gebracht) und dann in Montierrichtung 11 aufeinander zubewegt, sodass die Formschlusselemente 6, 7 paarweise ineinander eingreifen und dadurch die Formschlusseinrichtungen 10 gebildet werden. Beispielsweise wird unter positionellem Festhalten des Dekorträgers 2 der Befestigungsträger 3 in Bezug zu dem Dekorträger 2 in Montierrichtung 11 bewegt. Alternativ kann vorgesehen sein, dass unter einem Festhalten des Befestigungsträgers 3 der Dekorträger 2 entgegen Montierrichtung 11 in Bezug zu dem Dekorträger 2 bewegt wird. Auch ein gleichzeitiges Bewegen der Träger 2, 3 entlang der Montierrichtung 11 zueinander hin bzw. aufeinander zu ist denkbar.

Der Dekorträger 2 und der Befestigungsträger 3 bilden eine Sandwichkonstruktion, wobei die Träger 2, 3 nicht wie gewöhnlich senkrecht miteinander verclipst bzw. verhakt werden, sondern seitlich, nämlich entlang der Montierrichtung 11. Das bisher erforderliche Verschweißen der Träger 2, 3, um eine benötigte bzw. vorgegebene Steifigkeit zu erreichen, entfällt.

### BEZUGSZEICHENLISTE

- 1: Interieurelement
- 2: Dekorträger
- 3: Befestigungsträger
- 4: Dekorträgerbreitseite
- 5: Befestigungsträgerbreitseite
- 6: dekorträgerseitiges Formschlusselement
- 7: befestigungsträgerseitiges Formschlusselement
- 8: Befestigungsträgerkörper
- 9: Dekorträgerkörper
- 10: Formschlusseinrichtung
- 11: Montierrichtung
- 12: erstes Formschlusseinrichtung
- 13: Hochachse
- 14: Formschlusseinrichtung
- 15: Rastverbindung
- 16: Öffnung
- 17: Formschlusskörper
- 18: Pfeil
- 19: Pfeil

## Patentansprüche

1. Interieurelement (1) für ein Kraftfahrzeug, wobei das Interieurelement (1) aufweist:
- einen flachen Dekorträger (2), der an einer seiner Dekorträgerbreitseiten (4) dekorträgerseitige Formschlusselemente (6) aufweist;
- einen flachen Befestigungsträger (3), der an einer seiner Befestigungsträgerbreitseiten (5) befestigungsträgerseitige Formschlusselemente (7) aufweist;
wobei
- die Formschlusselemente (6, 7) paarweise zum Bilden einer jeweiligen Formschlusseinrichtung (10, 12, 14, 15) miteinander korrespondieren,
- die Formschlusselemente (6, 7) entlang einer Montierrichtung (11) miteinander in Eingriff gebracht sind, wodurch die Träger (2, 3) mittels der Formschlusseinrichtungen (10, 12, 14, 15), die durch die ineinandergreifenden Formschlusselemente (6, 7) gebildet sind, miteinander verbunden sind,
- die Montierrichtung (11) parallel zu der jeweiligen Trägerbreitseite (4, 5) der Träger (2, 3) verläuft.

2. Interieurelement (1) nach Anspruch 1,
**dadurch gekennzeichnet, dass**
die Träger (2, 3) unter Ausbleiben eines Stoffschlusses zwischeneinander, insbesondere ausschließlich mittels der Formschlusseinrichtungen (10, 12, 14, 15), miteinander verbunden sind.

3. Interieurelement (1), nach Anspruch 1 oder 2,
**gekennzeichnet durch**
- eine erste Formschlusseinrichtung (12), die ein Bewegen der Träger (2, 3) relativ zueinander entlang einer Hochachse (13) des Interieurelements (1) sperrt, und
- eine zweite Formschlusseinrichtung (14, 15), die ein Bewegen der Träger (2, 3) relativ zueinander entlang der jeweiligen Trägerbreitseite (4, 5) sperrt.

4. Interieurelement (1) nach Anspruch 3,
**dadurch gekennzeichnet, dass**
die zweite Formschlusseinrichtung (14) eine Rastverbindung (15) ist.

5. Interieurelement (1) nach einem der vorhergehenden Ansprüche,
**dadurch gekennzeichnet, dass**
der jeweilige Träger (2, 3) einen Trägerkörper (8, 9) aufweist, wobei der Trägerkörper (8, 9) und das Formschlusselement (6, 7) einstückig miteinander ausgebildet sind.

6. Interieurelement (1) nach einem der vorhergehenden Ansprüche,
**dadurch gekennzeichnet, dass**
das Formschlusselement (7) eines der Träger (3) durch eine Öffnung (16) des Formschlusselements (6) des anderen Trägers (2) hindurchgreift und dabei einen in die Öffnung (16) hineinragenden Formschlusskörper (17) des anderen Trägers (2) hintergreift.

7. Interieurelement (1) nach einem der vorhergehenden Ansprüche,
**dadurch gekennzeichnet, dass**
die Träger (2, 3) mittels einer Vielzahl von Formschlusseinrichtungen (10, 12, 14, 15) miteinander verbunden sind, wobei die Formschlusselemente (6, 7) der Formschlusseinrichtungen (10, 12, 14, 15) über die jeweilige Trägerbreitseite (4, 5) verteilt sind.

8. Verfahren zum Herstellen eines gemäß einem der vorhergehenden Ansprüche ausgebildeten Interieurelements (1), wobei der Dekorträger (2) und der Befestigungsträger (3) miteinander verbunden werden, indem
- der Dekorträger (2) und der Befestigungsträger (3) in eine Vormontierposition gebracht werden;
- ausgehend von der Vormontierposition die Träger (2, 3) entlang der parallel zu der jeweiligen Trägerbreitseite (4, 5) verlaufenden Montierrichtung (11) relativ zueinander bewegt werden, wodurch die Formschlusselemente (6, 7) zum Bilden der Formschlusseinrichtungen (10, 12, 14, 15) zwischen den Trägern (2, 3) paarweise miteinander in Eingriff gebracht werden.
